# EUROPEAN PATENT APPLICATION

(11) **EP 1 487 161 A1**
(43) Date of publication of application: **15.12.2004**
(21) Application number: 04253328.1
(22) Date of filing: 04.06.2004
(51) Int. Cl.: H04L 12/56, H04L 1/00

(54) **Radio telecommunications network, station and method of adapting the packets length**

(30) Priority: 10.06.2003 US 458567
(71) Applicant: LUCENT TECHNOLOGIES INC., Murray Hill, New Jersey 07974-0636 (US)
(72) Inventor: Jami, Iqbal, Swindon SN1 2SF (GB); Khan, Mohammed A., Swindon SN5 5AB (GB); Samuel, Isaac, Swindon, Wiltshire, SN5 5SH (GB)
(74) Representative: Sarup, David Alexander

(57) **Abstract**

A radio telecommunications network is provided comprising a first station and a second station. The first station is operative to send packets of data to the second station. The packets are of a predetermined length. The second station is operative to receive the data and send to the first station indicators of which packets of data from the first station have been accurately received. The second station is also operative to measure received signal quality and to send information of received signal quality to the first station. The first station is operative to select dependent upon said information a different length for further packets to be sent to the second station.

## Description

### Technical Field

The present invention relates to a radio telecommunications network comprising a first station and a second station. The present invention also relates to a method of sending packets of data from a first station to a second station in a radio telecommunications network. The present invention also relates to a radio telecommunications station.

### Background of the Invention

In a network for mobile telecommunications, the quality of a radio connection depends upon the radio environment. In networks involving code division multiple access (CDMA), the quality of a radio connection is also dependent upon the level of network loading. This is because power is limited and must be shared between radio connections to active users, but, of course, the quality of radio connection tends to decrease as power is reduced or interference from other users increases.

The performance of a radio interface between a cell and a user varies, of course, dependent upon the quality of the radio connection. For example, in bad radio conditions, a mobile voice user may find received audio is distorted, and a data application user may also find the throughput rate varying and sometimes dropping drastically. Making the radio interface more robust is a challenge.

One type of CDMA network is a Universal Mobile Telecommunications System (UMTS) network. Background on UMTS networks is provided in, for example, Third Generation Partnership Project Technical Report TR21.905.

### Summary of the Invention

A radio telecommunications network, a method, and a radio telecommunications station according to the present invention are defined in the independent claims to which the reader should now refer. Preferred features are laid out in the dependent claims.

An example of the present invention is a radio telecommunications network comprising a first station and a second station. The first station is operative to send packets of data of a predetermined length to the second station. The second station is operative to receive the data and send to the first station indicators of which packets of data from the first station have been accurately received. The second station is also operative to measure received signal quality and to send information of received signal quality to the first station. The first station is operative to select dependent upon said information a different length for further packets yet to be sent to the second station and to send said further packets.

Another example is a corresponding method of sending packets of data.

In preferred embodiments, a technique is provided of achieving a higher net data throughput rate by changing data packet length. A complete data packet must be correctly received so as to avoid a repeat attempt at transmitting that data packet. A simple but effective way is thus provided of adapting to changing radio conditions.

The packets of data are preferably service data units (SDU's). The SDU length is adjusted in response to the changing radio channel quality. One preferred embodiment involves Acknowledged Mode- Radio Link Control (AM-RLC) transmission in a UMTS network where it is the RLC SDU length that is adjustable.

The present invention also provides a method of sending packets of data from a first station to a second station in a radio telecommunications network. In an example method, the packets are of a predetermined length. The second station receives the data and sends to the first station indicators of which packets of data from the first station have been accurately received. The second station measures received signal quality and sends information of received signal quality to the first station. The first station selects dependent upon said information a different length for further packets yet to be sent to the second station.

The present invention also provides a radio telecommunications station operative to send packets of data of a predetermined length. An example is a station also operative to receive indicators of which packets of data have been accurately received and information as to the quality of received signals. The station is operative to select dependent upon said information a different length for further packets yet to be sent and to send said further packets.

### Brief Description of the Drawings

Preferred embodiments of the present invention will now be described by way of example and with reference to the drawings, in which:
Figure 1 is a diagram illustrating a UMTS network and a mobile user terminal,
Figure 2 is a diagram illustrating the protocol stack used in each,
Figure 3 is a diagram illustrating schematically RLC operation in transmission,
Figure 4 is a diagram illustrating schematically RLC operation in reception,
Figure 5 illustrates RLC operation in more detail,
Figure 6 is a diagram illustrating how SDU size is adjusted at various signal quality thresholds, and
Figure 7 is an example illustrating the approach.

### Detailed Description

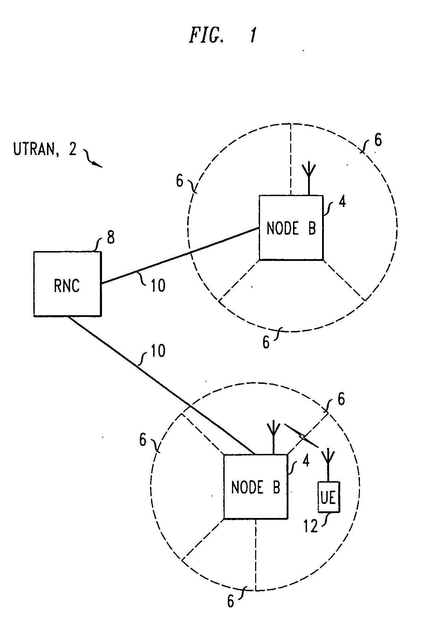

The preferred network is a Universal Mobile Telecommunications System (UMTS) terrestrial access network (UTRAN) , which is a type of wideband code division multiple access (W-CDMA) network for mobile telecommunications. The UTRAN network is basically as shown in Figure 1. Only one radio network controller and two base stations of the UTRAN network 2 are shown for simplicity. As shown in this Figure, the UTRAN network 2 includes base stations 4. Each base station (Node B in UMTS terminology) 4 typically has three cells 6 (i.e. radio coverage areas, also known as sectors) as the base station 4 typically has three directional antennas (not shown) angled at 120 degrees to each other in azimuth. Radio network controllers (RNC) 8 which are themselves connected to the rest of the telecommunications "world" (not shown) each control several base stations 4 and hence a number of cells 6. A base station 4 is connected to its controlling radio network controller (RNC) 8 via a respective interface 10 known as an luB interface. In use, a mobile user terminal 12 (often referred to as User Equipment (UE) in UMTS terminology) communicates with a serving radio network controller (RNC) 8 via at least one cell 6 of at least one base station 4 (i.e. communicates with the UTRAN network 2).

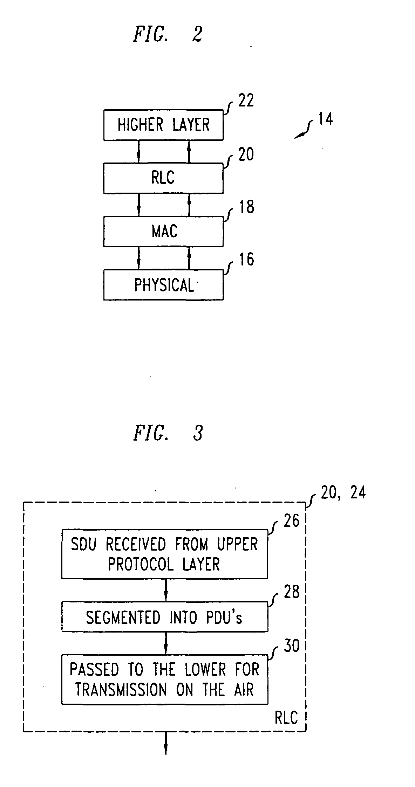

Communications between the mobile user terminal 12 and RNC 8 are undertaken using a series 14 of hierarchically layered protocols (often referred to as a protocol stack), as shown in Figure 2. The physical layer 16 receives data for transmission from the Medium Access Control (MAC) layer 18. The physical layer 16 offers various transport channels to the MAC layer 18. Different types of transport channels are defined by how and with what characteristics data is transferred on the physical layer 16. The MAC layer 18 offers various logical channels to the Radio Link Control (RLC) layer 20, where a logical channel is an information stream dedicated to a specific type of information characterising the logical channel. The RLC layer 20 receives data for transmission from a higher layer 22. The RLC layer 20 consists of processes, known as the User plane, to handle user data, and processes, known as the Control plane, to handle control signalling. The RLC layer 20 can provide an Acknowledged Mode (AM) data transfer service, i.e. a service involving retransmitting data packets until an acknowledgement of receipt is received.

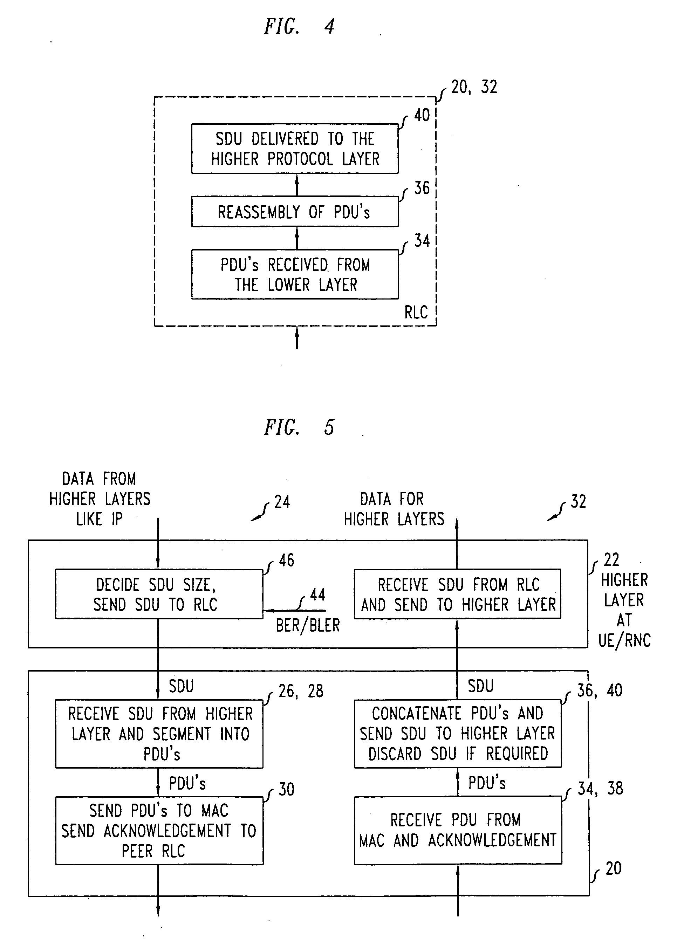

As shown in Figure 3, and in more detail in Figure 5, the transmitting side 24 of the Radio Link Control (RLC) protocol layer 20 operates in Acknowledged Mode (AM). The RLC layer 20 receives (step 26) Service Data Units (SDU's, also known as RLC SDU's) from upper protocol layers through an Acknowledged Mode-Service Access Point (AM-SAP, not shown). SDU's are segmented (step 28) by the transmitting side 24 of the RLC layer 20 into Acknowledged Mode Data- Protocol Data Units (PDU's) of a fixed length. An SDU is segmented as its size is larger than the length of the applicable PDU. The PDU size is configured by upper protocol layers, e.g. the higher layer 22, and is normally fixed. The PDU's are sent (step 30) to the MAC layer 18 for transmission. An SDU discard function (not shown) at the transmitting side 24 is used to remove the SDU's from a transmit buffer (not shown) when the transmission of one or more of the component PDU's of an SDU does not succeed despite a predetermined period of time passing or a number of retransmission attempts being made. Such a discard results in a fresh attempt at complete retransmission of the SDU initiated by the higher layer 22.

On the receiving side 32, as shown in Figure 4 and in more detail in Figure 5, the Acknowledged Mode (AM) RLC layer 20 receives (step 34) incoming PDU's from the lower protocol layer 18. The protocol data units (PDU's) are assembled 36 in a reception buffer (not shown) until a complete service data unit (SDU) has been received, whereupon the successfully received SDU is provided 40 to the higher layer 22.The receiver, which is either of the radio network controller (RNC) 8 and mobile user terminal 12, acknowledges successful reception or requests retransmission of the missing PDU's by sending one or more status reports (known as STATUS PDU's) to the corresponding RLC layer of the transmitter (i.e. the other of the RNC 8 and mobile user terminal 12). Status reports are thus sent to the transmitter acknowledging whether the PDU's are received correctly or not. Based on the acknowledgements, the transmitter (mobile user terminal 12 or RNC 8) removes the PDU from its retransmission buffer if that PDU has been received correctly or retransmits that PDU if not correctly received.

These acknowledgement and selective retransmission processes occur, of course, at both the mobile user terminal 12 and RNC 8.

With the radio link control (RLC) layer 20 operating in Acknowledged Mode (AM) in this way, the net data throughput rate over the air interface depends upon radio conditions. Consider a scenario where the mobile user terminal 12 encounters poor radio conditions. The probability of retransmission is high and the probability of discarding a protocol data unit (PDU) and so a service data unit (SDU) is higher than in normal radio conditions. With the increased probability of SDU discard, the inventors realised that RLC service data unit (SDU) size is a factor critical to the net data throughput rate. The inventors realised that in bad radio conditions, a smaller SDU size would result in less likelihood of an SDU being incorrectly received and so being discarded, and so provide a higher data throughput over the air interface, in particular when using AM RLC transmission.

Accordingly, radio quality measurements such as of the Bit Error Rate (BER) of the physical channel or transport channel, and/or Block Error Rate (BLER) of a transport channel, are provided (denoted 44 in Figure 5) as feedback to adjust SDU size (reference numeral 46 in Figure 5).

The SDU size used at the radio network controller (RNC) 8 is changed on the basis of BER and/or BLER measurements of the radio connection quality in the downlink direction (i.e. to the mobile user terminal) made by the mobile user terminal 12 and sent to the RNC 8. The SDU size used at mobile user terminal (UE) 12 is changed on the basis of BER and/or BLER measurements of the radio connection quality in the uplink direction (i.e. from the mobile user terminal) made by the base station (NodeB) 4 on behalf of the RNC 8 and sent to the UE 12 through control channels. The physical layer 16 carries out BER measurements on physical or transport channels. BLER measurement is carried out on transport channels by the Medium Access Control (MAC) protocol layer 18.

The measurements are taken frequently at the receiving side 32 (in the mobile user terminal 12 or RNC 8) and the information passed back to the corresponding transmitting side (in the other of the mobile user terminal 12 and RNC 8) frequently so that, where appropriate, rapid i.e. dynamic adjustment of SDU size is possible. The setting (step 46) of SDU size is performed either by an intermediate protocol layer (not shown) such as Packet Data Convergence Protocol (PDCP), or by the higher layer 22.

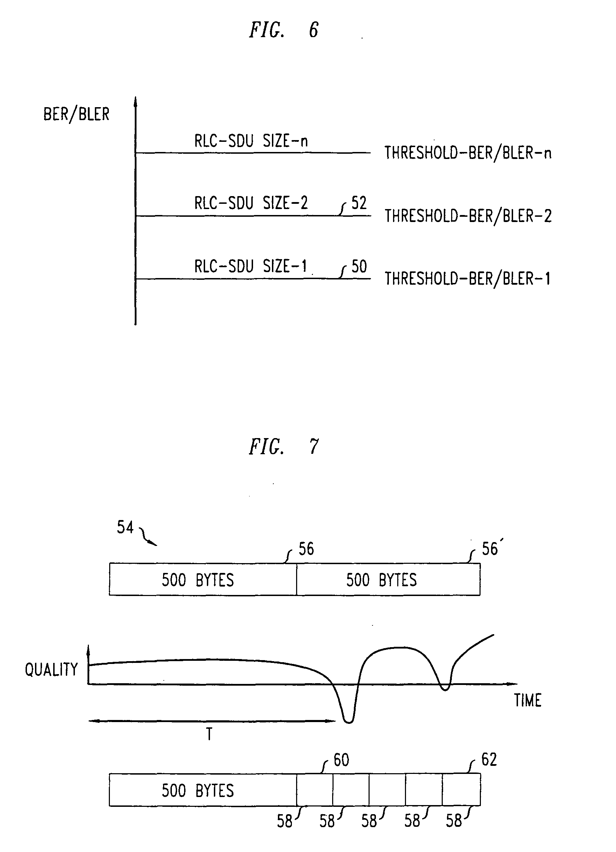

The proposed thresholds for measured signal quality at which SDU size is altered are illustrated schematically in Figure 6. SDU size is reduced from its largest Size 0 to Size1 when bit error rate (BER) is greater than a first threshold 50. Similarly, SDU size is reduced from Size1 to Size 2 when BER is greater than a second threshold 52, and so on. For example in the case of Internet Protocol as the higher layer 22, the SDU sizes are selected dependent on measured BER as shown in Table 1 below.

**Table 1**

| Bit Error Rate (BER) | Service Data Unit (SDU) size in bytes |
|---|---|
| 0-5% | 1500 |
| 5-7% | 800 |
| 7% or higher | 500 |

In some embodiments, the thresholds are set taking into account such factors as the delays involved so as to maximise the net throughput rate gain.

### Example Scenario

Figure 7 further illustrates the proposed approach. Say a data packet (i.e. RLC SDU)56 received from a higher layer is of size 500 bytes and each data packet is segmented into a series of PDU's small enough to be readily transmitted over the air-interface. For example, an SDU of 500 bytes is typically broken into 13 PDU's, each of 320bits (there being 8 bits per byte and the last of the 13 PDU's including 160 bits of padding). T is the time duration over which the transmission of the PDU's corresponding to one SDU takes place through the channel as shown in Figure 7.

When the channel condition is sufficiently good, (all of its component PDU's and hence) the first SDU 56 of 500 bytes is transmitted successfully over the air interface. However, if it is known through measurement of received signal quality at the receiving end that the channel condition is becoming bad, then action is taken by the higher layer 22 controlling the RLC layer 20 to reduce the service data unit (SDU) size. In the example shown in Figure 7, a packet 56' of 500 bytes is segmented into five SDU's 58 each of 100 bytes. As shown in Figure 7, the second 100 byte SDU 60 and the fifth 100 byte SDU 62 are not received correctly first time, as one or more of their respective component PDU's are still received in error after either a predetermined time-out period of PDU retransmission attempts (known as timer SDU discard) or a maximum number of attempts at successfully transmitting a PDU has been made (known as max-retransmission discard). Accordingly, the second 100 byte SDU 60 and fifth 100 byte SDU 62 are discarded. Assuming that these two 100 byte SDU's 60,62 are received correctly in the next attempt at their transmission, a total of at least 1200 bytes of data is required to be sent over the air interface to correctly deliver 1000 bytes of data to higher layers at the receiving end. Of course, in practice, there will also be some additional retransmission of PDU's.

In contrast, if the prior art approach were taken whereby SDU size is unchanged, during the transmission of the second SDU 56'of 500 bits, if the channel condition became bad then SDU 56' would be considered not to have been received correctly and so be discarded at the receiving side. In consequence the whole second SDU 56'of 500 bytes would need to be retransmitted. Assuming that the SDU 56' is received correctly upon first retransmission, a total of at least 1500 bytes of data are then required to be sent over the air interface to correctly deliver 1000 bytes of data to higher layers to the receiving end. Of course, in practice, there will also be some additional retransmission of PDU's.

Accordingly, we can see from this comparison that by using smaller data units in bad channel conditions, it is possible to send less retransmitted data so as to get the information across, resulting in a better net data throughput rate. Of course, net data throughput rate is one of the main parameters for gauging Quality of Service(QoS), i.e. overall performance of a network.

The preferred embodiment described above relates to a Universal Mobile Telecommunications System (UMTS) network. Other embodiments relate to other types of CDMA or W-CDMA networks.

## Claims

1. A radio telecommunications network comprising a first station and a second station,
the first station being operative to send packets of data of a predetermined length to the second station,
the second station being operative to receive the data and send to the first station indicators of which packets of data from the first station have been accurately received,
the second station also being operative to measure received signal quality and to send information of received signal quality to the first station,
the first station being operative to select a different length dependent upon said information for further packets to be sent to the second station and to send said further packets.

2. A radio telecommunications network according to claim 1, in which the first station is operative to retransmit the data packet(s) indicated as not having been accurately received.

3. A radio telecommunications network according to claim 1 or claim 2, in which the signal quality is measured periodically and if the first station determines that a predetermined signal quality threshold has been reached the different packet length is selected.

4. A radio telecommunications network according to any preceding claim, in which if signal quality is determined as deteriorating beyond a predetermined level, packet length is reduced.

5. A radio telecommunications network according to any preceding claim, in which the first station is one of a base station and a mobile user terminal, and the second station is the other of the base station and the mobile user terminal.

6. A radio telecommunications network according to any preceding claim, in which the received signal quality is measured as bit error rate (BER) or block error rate (BLER).

7. A radio telecommunications network according to any preceding claim, which is a Universal Mobile Telecommunications System (UMTS) radio telecommunications network, the first station operating according to a hierarchical protocol stack including a radio link control (RLC) layer operating in Acknowledged Mode (AM), the packets being RLC Service Data Units (SDU's).

8. A radio telecommunications network according to any preceding claim, in which the second station is also operative to send packets of further data to the first station, the packets of further data each being of a second predetermined length,
the first station being operative to receive further data and send to the second station indicators of which packets of the further data from the second station have been accurately received,
the first station being operative to measure received signal quality and to send information of the received signal quality to the second station,
the second station being operative to select dependent upon the information a length different from the second predetermined length for further packets to be sent to the first station.

9. A method of sending packets of data from a first station to a second station in a radio telecommunications network, packets being of a predetermined length,
the second station receiving the data and sending to the first station indicators of which packets of data from the first station have been accurately received,
the second station measuring received signal quality and sending information of received signal quality to the first station,
the first station selecting dependent upon said information a different length for further packets to be sent to the second station and sending said further packets.

10. A radio telecommunications station operative to
send packets of data each of a predetermined length, and to
receive indicators of which packets of data have been accurately received and information as to the quality of received signals,
the station being operative to select dependent upon said information a different length for further packets to be sent, and to
send said further packets.
